# EUROPEAN PATENT APPLICATION

(11) **EP 0 997 448 A2**
(43) Date of publication of application: **03.05.2000**
(21) Application number: 99121350.5
(22) Date of filing: 26.10.1999
(51) Int. Cl.: C04B 35/19

(54) **Large size low-expansion ceramic plate and setter, and process for producing the same**

(30) Priority: 27.10.1998 JP 30505598; 26.01.1999 JP 1742799
(71) Applicant: NICHIAS CORPORATION, Tokyo (JP)
(72) Inventor: Yamamoto, Mitsuo, Shinmiyakoda, Hamamatsu-shi, Shizuoka (JP); Sakamoto, Kouji, Shinmiyakoda, Hamamatsu-shi, Shizuoka (JP); Kodaka, Koujirou, Shinmiyakoda, Hamamatsu-shi, Shizuoka (JP); Yoshimoto, Toshihiro, Shinmiyakoda, Hamamatsu-shi, Shizuoka (JP); Kayama, Masaaki, Shinmiyakoda, Hamamatsu-shi, Shizuoka (JP); Shimazaki, Masatoshi, Shinmiyakoda, Hamamatsu-shi, Shizuoka (JP)
(74) Representative: Grünecker, Kinkeldey, Stockmair & Schwanhäusser Anwaltssozietät

(57) **Abstract**

Provided are a low-expansion ceramic plate having a length of 500 mm or more, a width of 500 mm or more, and a thickness of 10 mm or less which comprises β-spodumene or β-eucryptite containing 1 to 10% by weight of a metal oxide added as a sintering aid and has a bending strength of 250 to 600 kgf/cm² and a low-expansion ceramic setter which comprises β-spodumene or β-eucryptite containing 1 to 50% by weight of zircon and 0.05 to 10% by weight of a metal oxide added as a sintering aid other than zircon and has voids having a diameter of 0.8 to 90 µm and a length of 8 to 90,000 µm scattered at random. The large ceramic plate possesses machinability, low expansion properties, high strength, and high-temperature creep resistance so that it may be processed by cutting, drilling, shiplap or having joint, etc. into complicated shapes demanded for the refractories of muffle furnaces and it can be used as setters of firing furnaces.

## Description

### FIELD OF THE INVENTION

This invention relates to a large plate of ceramics which has a low thermal expansion, is machinable and can be produced at a reduced cost, and a low-thermal expansion ceramic setter which has high wear resistance, low water absorption and high bending strength, and which can be produced at a reduced cost.

### BACKGROUND OF THE INVENTION

In recent years plasma display panels (hereinafter abbreviated as PDP) have been intensively developed and put to practical use. Because of ease of obtaining PDP with an increased area, PDP is expected as a leading display panel of wall type wideframe hi-vision TV sets. Since PDP manufacturing involves several firing steps at a maximum temperature of 700°C, there is an eager prospective demand for large-sized firing furnaces and kilns, such as muffle furnaces composed of a muffle and a setter on which green ware is set. Refractories used in such large-sized muffle furnaces are required to have not only low expansion properties for securing thermal shock resistance but machinability to complicated shapes. In particular, setters are required to have sufficient bending strength and small high-temperature creep not to develop cracks or slag under heavy green ware, such as wideframe PDP. Setters are also required to have wear resistance not to produce dust on contact with alumina hearth rollers when inserted into the furnace. In addition, setters are required to have low water absorption in washing with water after use to remove contaminants so that they can be reused immediately after the washing.

Known low-expansion ceramics having a thermal expansion coefficient of 1 x 10⁻⁶ or smaller include β-spodumene ceramics (Li₂O-Al₂O₃-4SiO₂), β-eucryptite ceramics (Li₂O-Al₂O₃-2SiO₂), β-quartz or β-spodumene glass-ceramics, and quartz glass. While β-spodumene ceramics and β-eucryptite ceramics have a small thermal expansion coefficient and excellent thermal shock resistance, production meets difficulty in controlling sintering temperature due to the narrow temperature tolerance in sintering. JP-A-9-30860 discloses that β-spodumene refractories are produced in high yield without suffering from drying cracks by forming and firing a body comprising coarse petalite powder and fine petalite powder. According to this technique, however, it is difficult to produce rolled and fired plates larger than 450 mm x 450 mm x 15 mm (t), the possible maximum size, due to poor formability in rolling. Besides, the resulting refractories do not stand use as setters for large-sized furnaces due to poor bending strength. They are also unsatisfactory in wear resistance and water non-absorption.

β-Quartz or β-spodumene glass-ceramics have a smaller thermal expansion coefficient than quartz glass and also exhibit high bending strength, but production requires a high-temperature melting step, which entails considerable initial and maintenance cost of equipment, and an annealing step for crystallization after forming. This is unfavorable from the standpoint of energy consumption and economy.

Quartz glass has the same problem because of its high melting temperature. Also, it is not easy with quartz glass to manufacture large-sized products. Further, quartz glass is insufficient in wear resistance and water non-absorption and therefore unsuitable for manufacturing large size setters.

According to JP-A-58-76208, thin and large ceramics having a width of 300 mm or more, a length of 300 mm or more, and a thickness of 80 mm or less which can be produced by extruding a plastic body from a deairing pugmill into a cylinder, cutting the extruded cylinder open, rolling out the sheet, and drying and firing the rolled green sheet have an appreciably low rejection rate in industrial manufacturing. However, the thin and large ceramics thus obtained are not completely freed of crack initiation during drying. Further they have considerably low bending strength so that sufficient care should be needed in use as a firing furnace material or a setter.

JP-A-4-130053 teaches that low-expansion ceramics obtained by firing a uniform mixture of a lithia-based raw material, such as β-spodumene or β-eucryptite, and not more than 100% by weight, based on the raw material, of 5 µm or smaller zircon particles are excellent in thermal shock resistance and strength. The disclosure, however, has no reference to wear resistance or water absorption. Further, a setter larger than 450 mm by 450 mm and thinner than 14 mm is not obtained by. the teaching.

Thus none of the conventional techniques has succeeded in producing thin and large ceramic setters 450 mm or larger in length, 450 mm or more in width and 14 mm or less in thickness which have low expansion properties, high strength, high wear resistance, and low water absorption.

### SUMMARY OF THE INVENTION

An object of the present invention is to provide a large size low-expansion ceramic plate which exhibits excellent machinability to complicated shape as demanded for use as a muffle furnace material as well as low expansion properties and which can be produced at a reduced cost.

Another object of the invention is to provide a large size low-expansion ceramic setter satisfying the requirements for use in a large-sized firing furnace, that is, low expansion properties, high bending strength, wear resistance, and low water absorption, and which can be produced at a reduced cost.

As a result of extensive studies, the present inventors have found that, in producing a large ceramic plate, the sintering temperature range can be broadened, and firing can be accomplished with ease and in a high yield by a process using a body having a specific composition and a specific particle size. They have also found that the resulting large ceramic plate possesses machinability, low expansion properties, high strength, and high-temperature creep resistance so that it may be processed by cutting, drilling, shiplap or having joint, etc. into complicated shapes demanded for the refractories of muffle furnaces and it can be used as setters of firing furnaces.

Based on the above findings, the invention provides, in a first aspect, a large size low-expansion ceramic plate having a length of 500 mm or more, a width of 500 mm or more, and a thickness of 10 mm or less which comprises β-spodumene or β-eucryptite containing a metal oxide added as a sintering aid and has a bending strength of 250 to 600 kgf/cm². The large ceramic plate according to this aspect exhibits excellent heat resistance and thermal shock resistance characteristic of crystallized glass comprising β-spodumene or β-eucryptite. Having such a large size not heretofore reached by conventional β-spodumene refractories, the ceramic plate is applicable to large-sized firing furnaces used for the manufacture of large-sized PDP. Having moderate bending strength, it can be machined by cutting, drilling, shiplap or having joint, etc. to a complicated shape demanded as refractories of muffle furnaces. Having satisfactory resistance to creep at high temperature, it is useful as refractories of muffle furnaces or setters of large-sized firing furnaces.

The invention also provides a preferred process for producing the above-described low-expansion ceramic plate which comprises the steps of (1) mixing and grinding a petalite raw material, clay, and a metal oxide added as a sintering aid to prepare a body having an average particle size of 3 to 10 µm, (2) kneading the body together with water to prepare a plastic body, (3) extruding the plastic body into a shape having a loop section by means of a deairing pugmill, (4) cutting the extrudate open and rolling the resulting sheet by means of a forming roller in the same direction as the extrusion direction to obtain a rolled sheet, (5) forming the rolled sheet into a prescribed shape, and (6) drying and firing the formed green body. According to this process, the sintering temperature range can be broadened, and firing can be accomplished with ease and in a high yield, leading to cost reduction.

The present inventors have also found that a low-expansion ceramic plate comprising β-spodumene or β-eucryptite having a specific composition and having voids scattered at random exhibits, for unknown reasons, excellent bending strength, high wear resistance and low water absorption as well as low expansion properties and is therefore suitable as a setter.

Based on the above finding, the invention provides, in its second aspect, a low-expansion ceramic setter which comprises β-spodumene or β-eucryptite containing zircon and a metal oxide added as a sintering aid other than zircon and has voids having a diameter of 0.8 to 90 µm and a length of 8 to 90,000 µm scattered at random. The setter of the invention exhibits excellent heat resistance and thermal shock resistance characteristic of β-spodumene or β-eucryptlte ceramics. Further, while the action of mechanism has not been elucidated, it has high wear resistance, low water absorption, and high bending strength as well as low expansion properties. Therefore, when the setter is inserted into a furnace in contact with hearth rollers, it does not produce dust which may contaminate the fired product. Even when the setter is contaminated with the fired product, it can be washed with water and immediately made ready for the next firing operation.

The invention also provides a preferred process for producing the above-described low-expansion ceramic setter which comprises the steps of (1) mixing and grinding fine petalite powder and fine zircon powder to prepare a mixed powder having an average particle size of 1 to 5 µm, (2) mixing and grinding the mixed powder, a petalite raw material, clay, and a metal oxide to prepare a body having an average particle size of 2 to 10 µm, (3) kneading the body together with water and fiber to prepare a plastic body, (3) extruding the plastic body into a shape having a loop section by means of a deairing pugmill, (4) cutting the extrudate open and rolling the resulting sheet by means of a forming roller in the same direction as the extrusion direction to obtain a rolled sheet, (5) forming the rolled sheet into a prescribed shape, and (6) drying and firing the formed green body.

### BRIEF DESCRIPTION OF THE DRAWINGS

Fig. 1 is a scanning electron micrograph (SEM) (100X) taken of the cut section of a low-expansion ceramic setter according to the invention.

Fig. 2 is a sketch of the SEM of Fig. 1.

### DETAILED DESCRIPTION OF THE INVENTION

The large size low-expansion ceramic plate according to the first aspect of the invention can be produced by, for example, a process comprising the steps of (1) mixing and grinding a petalite raw material, clay, and a metal oxide added as a sintering aid to prepare a ground mixed powder (body) having an average particle size of 3 to 10 µm (body preparation step) , (2) kneading the body together with water to prepare a plastic body (kneading step) , (3) extruding the plastic body into a shape having a loop section by means of a deairing pugmill (vacuum pressing step), (4) cutting the extrudate open and rolling the resulting sheet by means of a forming roller in the same direction as the extrusion direction to obtain a rolled sheet (rolling step) , (5) forming the rolled sheet into a prescribed shape (forming step), and (6) drying and firing the formed green body (drying and firing step).

In the body preparation step, a mixed powder of a petalite raw material having, for example, a composition of Li₂O-Al₂O₃-8SiO₂ and a purity of 98 wt%, clay, such as kibushi clay or gaerome clay, and a metal oxide as a sintering aid is ground to an average particle size of 3 to 10 µm. Bodies whose average particle size greater than 10 µm have poor formability in rolling and are difficult to roll into a thin plate and have low strength after firing. If the average particle size is smaller than 3 µm, thin plates formed therefrom develop drying cracks frequently, and the resulting ceramic plates have reduced machinability.

The metal oxide which can be added as a sintering aid includes oxides of zinc, nickel, zirconium, magnesium, titanium, yttrium or a like metal. These metal oxides can be used either individually or as a combination of two or more thereof.

The method of grinding the mixed powder is not particularly restricted. For example, predetermined amounts of a petalite raw material, clay, a sintering aid, a dispersant, and water are mixed up and wet ground in a ball mill for several tens of hours to an average particle size of 3 to 10 µm. The resulting slurry is dried, disintegrated and, if necessary, passed through a screen to obtain a ground mixed powder (body). The body can also be obtained by separately preparing a first ground mixture comprising a petalite raw material and clay having a prescribed average particle size and a second ground mixture comprising a metal oxide having a prescribed average particle size and mixing the first and second ground mixtures.

The proportion of clay in the body is preferably 20 to 40% by weight. If it is less than 20%, plasticity is insufficient for forming into a large plate. If it exceeds 40%, the ceramic plate will have a thermal expansion coefficient exceeding 1 x 10⁻⁶.

The metal oxide added as a sintering aid serves to accelerate crystal nucleation and to densify the body during firing. The proportion of the metal oxide as a sintering aid ranges from 1 to 10% by weight, preferably 2 to 8% by weight, based on the body. If the amount of the metal oxide is less than 1%, crystallization takes time, and the resulting sintered body tends to fail to secure high strength. If added in an amount exceeding 10%, the metal oxide may hardly melt, and the resulting product will have deteriorated high-temperature creep resistance. The proportion of the petalite raw material in the body preferably ranges from 50 to 75% by weight.

In the kneading step, water and an appropriate binder are mixed into the body prepared in the body preparation step, and the mixture is kneaded in a kneader, a fret mill, etc. for a prescribed period of time to obtain a plastic body. It is a preferred embodiment to further add reinforcing fiber to the mixture, particularly the plastic body, in an amount of 0.05 to 0.5% by weight based on the plastic body. The reinforcing fiber added to the plastic body, i.e., after development of plasticity, is dispersed well, which is more effective in preventing cracks. Less than 0.05% of the reinforcing fiber is insufficient for crack prevention. Addition of more than 0.5% of the fiber makes it difficult to trim the green sheet. While not limiting, useful reinforcing fibers includes pulp, polypropylene fiber, rayon fiber, vinylon fiber, nylon fiber, acrylic fiber, and carbon fiber.

In the vacuum pressing step, the plastic body from the kneading step is extruded into a shape having a loop section by means of a deairing pugmill. The shape of the extrudate is not particularly limited as far as it has a loop section and includes a cylinder having a circular, semi-circular or elliptical section. A cylindrical shape having a circular section is preferred.

In the rolling step, the cylindrical extrudate is cut open, and the resulting sheet is rolled by a forming roller in the same direction as the extrusion direction. In this rolling step, it is preferred that the sheet rolled in the extrusion direction is further rolled in the direction perpendicular to the extrusion direction, whereby cracking which may occur in the first rolling direction due to the orientated reinforcing fibers can be prevented.

In the forming step, the rolled sheet is processed to the form of a large plate of prescribed size and shape.

The resulting thin and large green sheet of prescribed shape is then dried and fired. Drying is carried out, for example, by means of a hot air drier at 70 to 800°C for about 1 hour. Firing is usually carried out in a roller hearth kiln at a firing temperature of 1050 to 1350°C for about 1 hour.

The low-expansion ceramic plate according to the first aspect of the invention thus produced comprises β-spodumene or β-eucryptite and has a bending strength of 250 to 600 kgf/cm² and can have a large size as long as 500 mm or more and as wide as 500 mm or more with a thickness of 10 mm or less. It has a thermal expansion coefficient of 1 x 10⁻⁶ or smaller, preferably 1 x 10⁻⁷ to 1 x 10⁻⁶. Having such a moderate bending strength, the plate can be subjected to machining, such as cutting and drilling, to a complicated shape as demanded for use as refractories making up a muffle furnace. It is also useful as a setter of a firing furnace. A preferred size of the plate is 600 to 3000 mm in width and length and 2 to 7 mm in thickness, particularly 900 to 2400 mm in width and length and 3 to 6 mm in thickness. .

The low-expansion ceramic setter according to the second aspect of the invention preferably comprises β-spodumene or β-eucryptite containing 1 to 50% by weight of zircon and 0.05 to 10% by weight of a metal oxide added as a sintering aid other than zircon and has a plurality of column-shaped voids having a diameter of 0.8 to 90 µm and a length of 8 to 90,000 µm scattered at random.

The low-expansion ceramic setter according to the invention can be produced by, for example, a process comprising the steps of (1) mixing and grinding fine petalite powder and fine zircon powder to prepare a mixed fine powder having an average particle size of 1 to 5 µm (mixed powder preparation step), (2) mixing and grinding the mixed fine powder prepared in step (1), a petalite raw material, clay, and a metal oxide to prepare a body having an average particle size of 2 to 10 µm (body preparation step), (3) kneading the resulting body together with water and fiber to prepare a plastic body (kneading step), (3) extruding the plastic body into a shape having a loop section by means of a deairing pugmill (vacuum pressing step), (4) cutting the extrudate open and rolling the resulting sheet by means of a forming roller in the same direction as the extrusion direction to obtain a rolled sheet (rolling step), (5) forming the rolled sheet into a prescribed shape (forming step) , and (6) drying and firing the formed green body (drying and firing step).

In the mixed powder preparation step, fine petalite powder and fine zircon powder are mixed and ground to obtain a mixed powder having an average particle size of 1 to 5 µm. The petalite fine powder is prepared by grinding a petalite raw material mainly comprising petalite having a composition of Li₂O-Al₂O₃-8SiO₂ in a ball mill, etc. to an average particle size of 1 to 5 µm, preferably 2 to 4 µm. The petalite raw material is not particularly limited as far as it chiefly comprises petalite and includes, for example, petalite #200 having an average particle size of 32 µm and a purity of 98% by weight (available from Kinsei Matec Co., Ltd.).

The fine zircon powder has an action of increasing the denseness of the ceramic setter. The fine zircon powder is prepared by grinding zircon having a composition: ZrSiO₄ in a ball mill, etc. to an average particle size of 1 to 5 µm, preferably 2 to 4 µm. The zircon does not need to be pure and may contain trace amounts of impurities. For example, zircon #350 having an average particle size of 20 µm (available from Kinsei Matec Co., Ltd.) can be used.

The fine petalite powder and fine zircon powder are mixed together and ground to an average particle size of from 1 to 5 µm, preferably 2 to 4 µm, still preferably 2.2 to 2.6 µm. The mixed powder thus prepared acts to increase the denseness thereby to improve the wear resistance of the ceramic setter. If the average particle size of the mixed powder is smaller than 1 µm, the green body tends to develop cracks due to shrinkage on drying. If it is greater than 5 µm, the denseness is reduced to reduce wear resistance. In addition to the above-specified average particle size, it is preferred for the mixed powder to have such a particle size distribution as comprises 4 to 12% (preferably 6 to 10%) of 0.5 µm or smaller particles and 50 to 75% (preferably 60 to 65%) of 5 µm or greater particles. This particle size distribution, not too sharp but moderately broad, is effective in increasing the density of the body and preventing cracks on drying.

In the body preparation step, the mixed powder prepared above, a petalite raw material, clay, and a metal oxide are mixed up and ground to prepare a body having an average particle size of 2 to 10 µm. The petalite raw material which can be used in this step is the same in composition but greater in average particle size than the fine petalite powder used in the preceding step of preparing a mixed powder. That is, the petalite raw material used here usually has an average particle size of 5 to 1000 µm, preferably 50 to 100 µm. Use of smaller petalite raw material particles than 5 µm tends to cause cracks on drying. Use of greater petalite raw material particles than 1000 µm results in surface roughening. Useful petalite raw materials include petalite #200 having an average particle size of 32 µm and a purity of 98% by weight and petalite #52 having an average particle size of 70 µm and a purity of 98% by weight (available from Kinsei Matec Co., Ltd.). Petalite #52 having a large particle size is preferred for obtaining a body having a moderately broad particle size distribution as hereinafter described.

The clay to be used includes kibushi clay and gaerome clay.

The metal oxide added as a sintering aid other than zircon includes oxides of zinc, nickel, zirconium, titanium, magnesium and yttrium, with zinc oxide and zirconium oxide being preferred. The metal oxide preferably has an average particle size of 0.01 to 10 µm, particularly 1 to 5 µm. The metal oxide as a sintering aid acts to accelerate crystal nucleation thereby to densify the body during firing. Also, it remains in the sintered body to serve for solution strengthening. The above-enumerated metal oxides can be used either individually or as a combination of two or more thereof.

The body preferably has an average particle size of 2 to 10 µm, still preferably 2.5 to 6 µm, particularly preferably 2.8 to 5 µm. If the average particle size of the body is too small, cracks develop frequently on drying, making it difficult to obtain a thin plate, and wrinkles occur during rolling. If the average particle size of the body is too large, the body has poor formability in rolling and is difficult to roll out thin. Further, the resulting sintered body, i.e., the ceramic setter, has reduced strength and reduced wear resistance. In addition to the above-specified average particle size, it is preferred for the body to have a particle size distribution comprising 10 to 30% (preferably 15 to 30%) of 1 µm or smaller particles and 15 to 35% (preferably 18 to 30%) of 10 µm or greater particles. This particle size distribution, not too sharp but moderately broad, is effective in improving bending strength and wear resistance of the ceramic setter.

The method for regulating the average particle size and particle size distribution of the body within the above-described preferred ranges is not particularly restricted. For example, the body having the preferred powder characteristics can be prepared by mixing the mixed fine powder, a petalite raw material, clay, and a metal oxide with water, a dispersant, and the like and grinding the mixture in a grinding means, such as a ball mill. More specifically, the mixture is wet ground for several tens of hours to obtain a slurry, and the resulting slurry is dried, disintegrated and, if necessary, passed through a screen to obtain a dry and solid body.

The proportion of the fine petalite powder in the body is preferably 5 to 70% by weight, still preferably 10 to 40% by weight, particularly preferably 18 to 22% by weight. If the proportion of the fine petalite powder is less than 5%, densification is insufficient for securing satisfactory wear resistance. Use of more than 70% of the fine petalite powder tends to cause drying cracks. The proportion of the fine zircon powder in the body is 1 to 50% by weight, preferably 4 to 30% by weight, still preferably 12 to 18% by weight. If the proportion of the fine zircon powder is less than 1%, densification is insufficient for securing satisfactory wear resistance. If it exceeds 50%, the resulting setter will have a high thermal expansion coefficient and thereby reduced thermal shock resistance.

The total amount of the fine petalite powder and the fine zircon powder (i.e., the proportion of the mixed powder obtained in the mixed powder preparation step) in the body is preferably 6 to 99% by weight, still preferably 19 to 65% by weight, particularly preferably 30 to 50% by weight. If it is less than 6%, densification is insufficient for securing satisfactory wear resistance. If it exceeds 99%, the resulting setter has a high thermal expansion coefficient and thereby reduced thermal shock resistance.

The proportion of the petalite raw material in the body is preferably 5% by weight or more, still preferably 5 to 70% by weight, particularly preferably 11 to 25% by weight. In a proportion less than 5%, drying cracks tend to develop. If present in a proportion exceeding 70%, densification is insufficient, resulting in reduced wear resistance. The proportion of clay in the body is preferably 20 to 40% by weight, still preferably 35 to 40% by weight. Less than 20% of clay is insufficient for securing plasticity enough to forming into a setter. More than 40% by weight of clay raises the thermal expansion coefficient over 3 x 10⁻⁶.

The proportion of the metal oxide in the body is 0.05 to 10% by weight, preferably 1 to 10% by weight. The metal oxide, being present within this range, accelerates crystal nucleation to densify during firing. If the amount of the metal oxide is less than 0.05%, crystallization takes time, and the strength is reduced. If the amount exceeds 10%, the metal oxide hardly melts, and the resulting product has deteriorated high-temperature creep resistance.

In the kneading step, appropriate amounts of water, fiber, and an appropriate binder are added to the body, and the mixture is kneaded in a kneader, a fret mill, etc. for a prescribed period of time to obtain a plastic body. The fiber as dispersed in the plastic body prevents crack development during drying and firing and is burnt up by the heat of firing to leave voids in the final product. Useful fibers includes carbon fiber, polypropylene fiber, pulp, rayon fiber, aramid fiber, vinylon fiber, nylon fiber, and acrylic fiber, with carbon fiber and polypropylene fiber being preferred. These fibers can be used either individually or as a mixtures of two or more thereof. For example, a combination of carbon fiber and polypropylene fibers is preferably used. The individual fibers preferably have a diameter of 1 to 100 µm, particularly 6 to 15 µm, and a length of 10 to 100,000 µm, particularly 500 to 6000 µm. Fibers thinner than 1 µm or shorter than 10 µm are inadequate to prevent drying cracks. Fibers thicker than 100 µm roughen the surface of the green body. Fibers longer than 100,000 µm are liable to be entangled to become fiber balls when kneaded.

The fiber may be added to the body together with water and a binder, but it is preferred for the fiber to be added after the body mixed with water and the binder develops plasticity so that the fiber may be dispersed well in the plastic body. The amount of the fiber to be added is preferably 0.05 to 10 parts, still preferably 0.05 to 5.0 parts, particularly preferably 0.1 to 1.1 parts, by weight per 100 parts by weight of the body. In amounts less than 0.05 part, the effects in crack prevention on drying and firing are insufficient.. Addition of more than 0.5 part of the fiber makes it difficult to trim the green sheet and causes wrinkles during rolling.

The amount of water to be added in the kneading step is decided appropriately so that the resulting plastic body may have a water content of 14 to 23% by weight, preferably 19 to 23% by weight.

In the vacuum pressing step, the plastic body from the kneading step is extruded into a shape having a loop section by means of a deairing pugmill. The shape of the extrudate is not particularly limited as far as it has a loop section and includes a cylinder having a circular, semi-circular or elliptical section. A cylindrical shape having a circular section is preferred.

In the rolling step, the cylindrical extrudate is cut open, and the resulting sheet is rolled by a forming roller in the same direction as the extrusion direction. It is preferred that the uniaxially rolled sheet is further rolled in the direction perpendicular to the extrusion direction, whereby the green sheet can be prevented from cracking which may occur in the first rolling direction due to the orientated reinforcing fibers.

In the forming step, the rolled sheet is formed into the form of a setter of prescribed size and shape.

The resulting green sheet is then dried and fired. Drying is carried out, for example, by means of a hot air drier at 70 to 800°C for about 1 hour. Firing is usually carried out in a roller hearth kiln at a firing temperature of 1050 to 1350°C, preferably 1150 to 1250°C, for a period of 0.5 to 1.5 hours, preferably about 1 hour.

The low-expansion ceramic setter according to the second aspect of the invention thus produced mainly comprises β-spodumene or β-eucryptite and contains zircon and a metal oxide other than zircon. The ceramic setter has a zircon content of 1 to 50% by weight, preferably 4 to 30% by weight, more preferably 10 to 20% by weight, most preferably 12 to 18% by weight. If the zircon content is less than 1% by weight, densification is insufficient for securing satisfactory wear resistance. If it exceeds 50% by weight, the setter has a high thermal expansion coefficient and thereby reduced thermal shock resistance. The content of the metal oxide other than zircon in the setter is 0.05 to 10% by weight, preferably 1 to 10% by weight, still preferably 1.2 to 5% by weight. If the metal oxide content is less than 1%, denseness is reduced. If it exceeds 10%, the thermal expansion coefficient increases.

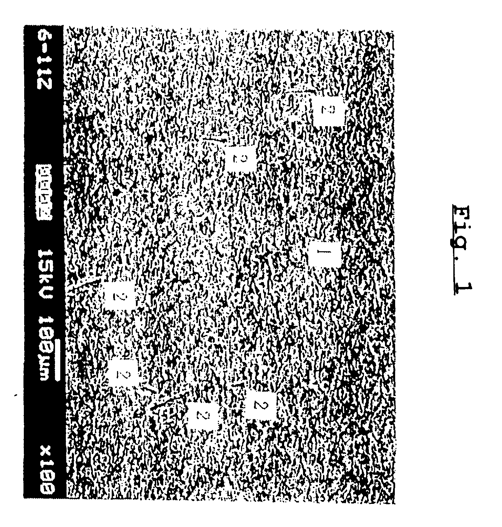

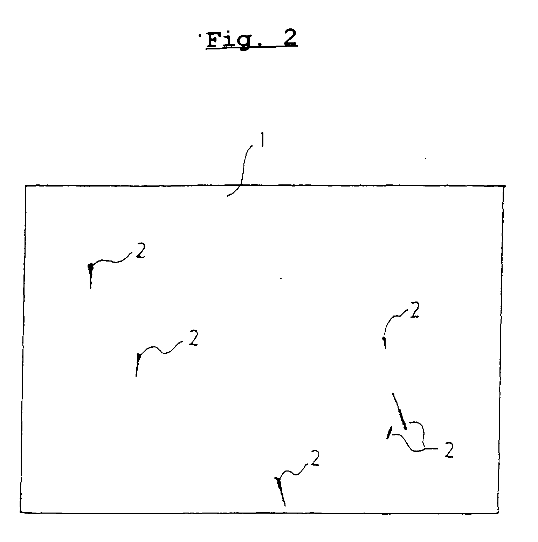

The low-expansion ceramic setter according to the second aspect of the invention is characterized by the voids of 0.8 to 90 µm in diameter and 8 to 90,000 µm in length scattered in all directions. Fig. 1 is an SEM (100×) taken of the cut area of a setter according to the invention, wherein β-spodumene 1 containing zircon and a metal oxide other than zircon is spotted with voids 2. Fig. 2 is a sketch of Fig. 1, wherein the voids 2 are clearly shown. The voids 2 are traces of burnt fibers and, in this particular example, have a diameter of about 10 µm and a length of about 120 µm. The low-expansion ceramic setter having such a microstructure has a thermal expansion coefficient of 5 x 10⁻⁶ or smaller, preferably 1 x 10⁻⁶ to 3 x 10⁻⁶, and a bending strength of 250 to 900 kgf/cm².

The low-expansion ceramic setter of the invention is excellent in wear resistance, having an abrasion wear of not more than 30 mg, preferably 20 mg or less, still preferably 10 mg or less, per 1000 rotations in an alumina roll wear test using a JIS Taber type abrasion tester. The low-expansion ceramic setter has a water absorption of not more than 7%, preferably 3% or less, still preferably 2% or less. It is possible for the ceramic setter to have a large size with a small thickness, i.e., a length of 500 mm or more, a width of 500 mm or more, and a thickness of 14 mm or less, preferably a length and a width of 600 to 3000 mm and a thickness of 4 to 10 mm, still preferably a length and a width of 900 to 2400 mm and a thickness of 5 to 6 mm. Having the bending strength within the above range, the ceramic setter has sufficient machinability. In short, the low-expansion ceramic setter according to the invention has not only low-expansion properties but a high bending strength, high wear resistance, and a low water absorption and can be produced at a low cost.

The large low-expansion ceramic plate and setter according to the invention can be processed to the desired shape by machining, such as cutting or drilling, for use as a setter of a muffle furnace, a burning tool, a surface plate, a constructional wallboard, and so forth.

The present invention will now be illustrated in greater detail with reference to Examples, but it should be understood that the invention is not limited thereto. Unless otherwise noted, all the parts and percents are given by weight.

### EXAMPLES 1 TO 3

Petalite raw material, gaerome clay and magnesia were mixed according to the formulation shown in Table 1 below and wet ground with water in a ball mill for 2 hours. The resulting slurry was dried and disintegrated to prepare a mixed powder having an average particle size of 7 µm as measured with a laser diffraction particle size distribution analyzer (SALD 2000, manufactured by Shimadzu Corp.) . Eighty parts of the mixed powder and 20 parts of water were kneaded in a kneader for 30 minutes to prepare a plastic body. During the kneading, 0.2% of pulp fiber was added to the plastic body. The plastic body was put in a deairing pugmill and extruded through a tubular die having an outer diameter of 150 mm and a thickness of 15 mm. The extruded tube was cut open to obtain a sheet 450 mm long, 200 mm wide and 15 mm thick. The sheet was rolled with a forming roller in the extrusion direction, dried in a hot air conveyer drier, and fired at 1200°C for 1 hour.

Formability in rolling was evaluated. Crack development was observed after drying and after firing. A specimen was cut out of the resulting ceramic plate, and a thermal expansion coefficient and a bending strength were measured. Machinability of the ceramic plate was evaluated based on the degree of corner defects and chipping in cutting with a circular saw. A high-temperature creep strain was measured in a three-point bending test under the following conditions. The results of the evaluation and testing are shown in Table 1.

### Creep test conditions:

Measuring equipment: High-temperature bending tester, HV-30HS manufactured by EKO
Specimen: 160 x 40 x 5 mm, span: 100 mm
Testing conditions: 700°C x 24 hours
Load: 10 kg

### COMPARATIVE EXAMPLES 1 TO 3

A ceramic plate was prepared in the same manner as in Example 1, except for using 95 parts of a petalite raw material and 5 parts of magnesia (Comparative Example 1), 85 parts of a petalite raw material, 10 parts of gaerome clay and 5 parts of magnesia (Comparative Example 2), or 45 parts of a petalite raw material, 50 parts of gaerome clay and 5 parts of magnesia (Comparative Example 3). The results of evaluation and testing are shown in Table 1.

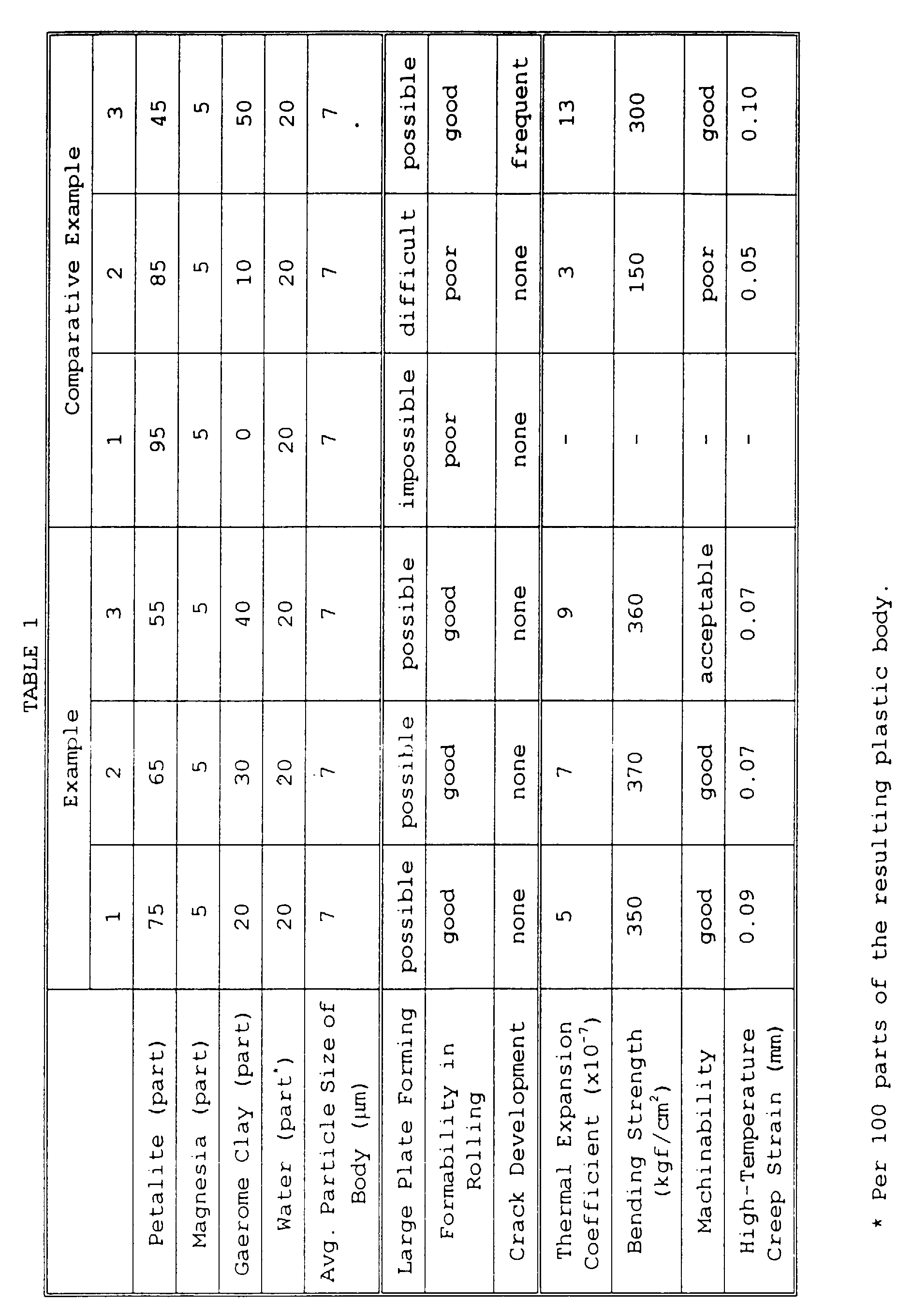

It can be seen from Table 1 that the bodies containing 20 to 40% of gaerome clay (Examples 1 to 3) exhibit satisfactory rolling formability to obtain a wide rolled sheet, which can be dried and fired without suffering from crack development to provide a large ceramic plate having both machinability and low expansion properties. On the other hand, the comparative bodies containing less than 20% of gaerome clay have so poor rolling formability that formation of a large ceramic plate is difficult or impossible. The comparative body containing more than 40% of gaerome clay develops many cracks.

### EXAMPLE 4

A ceramic plate was prepared in the same manner as in Example 1, except for using 65 parts of a petalite raw material, 33 parts of gaerome clay and 2 parts of zinc oxide and changing the average particle size of the body to 8 µm. The results of evaluation and testing are shown in Table 2.

### EXAMPLE 5

A ceramic plate was prepared in the same manner as in Example 4, except for changing the average particle size of the body to 6 µm. The results of evaluation and testing are shown in Table 2.

### EXAMPLE 6

A ceramic plate was prepared in the same manner as in Example 4, except that the amount of water used in the kneading step was changed to 21 parts and the average particle size of the body was changed to 4 µm. The results of evaluation and testing are shown in Table 2.

### COMPARATIVE EXAMPLE 4

A ceramic plate was prepared in the same manner as in Example 4, except that the amount of water used in the kneading step was changed to 22 parts and the average particle size of the body was changed to 15 µm. The results of evaluation and testing are shown in Table 2.

### COMPARATIVE EXAMPLE 5

A ceramic plate was prepared in the same manner as in Example 4, except that the average particle size of the body was changed to 12 µm. The results of evaluation and testing are shown in Table 2.

### COMPARATIVE EXAMPLE 6

A ceramic plate was prepared in the same manner as in Example 4, except that the amount of water used in the kneading step was changed to 23 parts and the average particle size of the body was changed to 2 µm. The results of evaluation and testing are shown in Table 2.

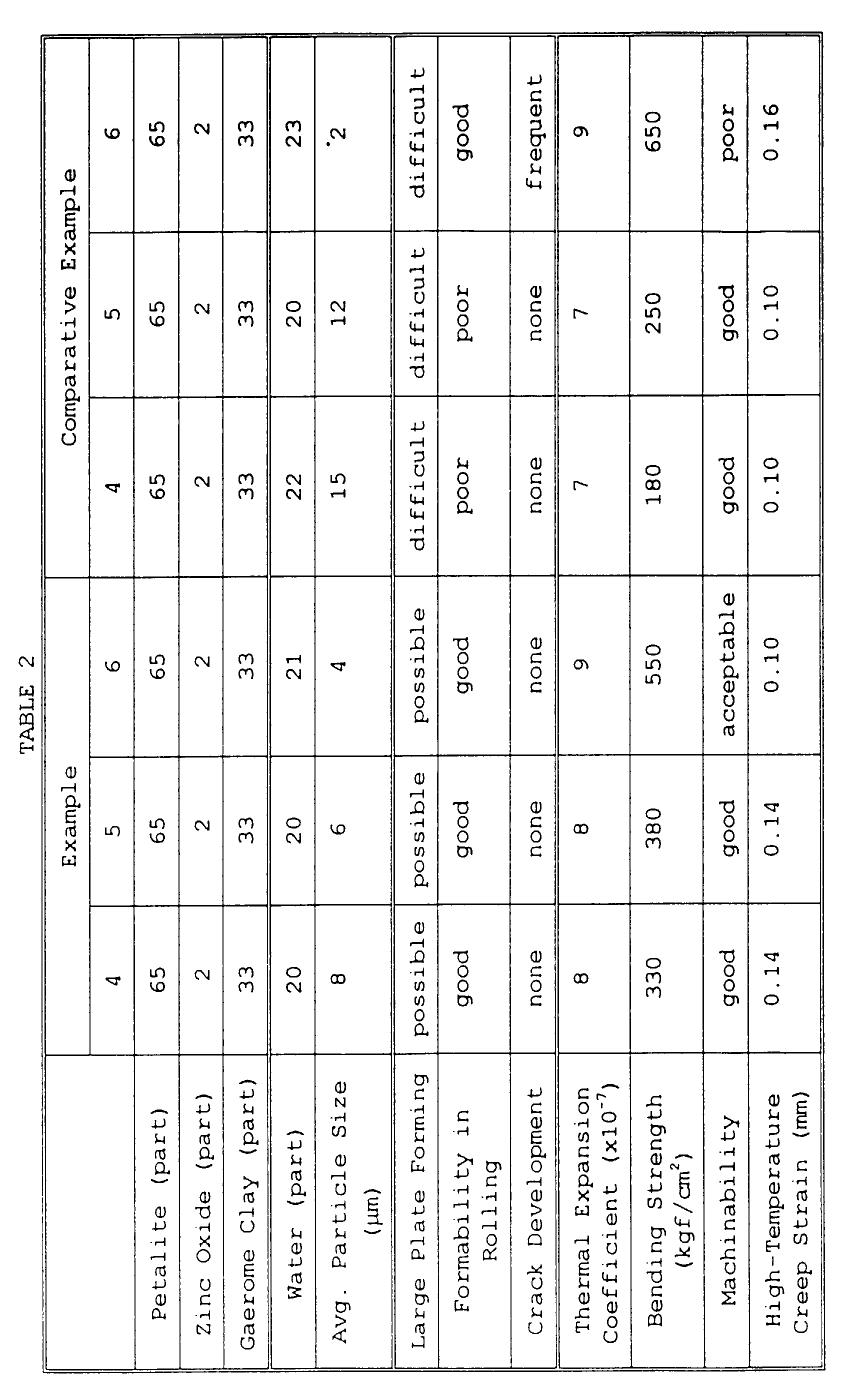

As is understood from the results of Examples 4 to 6, the bodies whose average particle size falls within a range of from 3 to 10 µm exhibit satisfactory formability in rolling to obtain a wide rolled sheet, which can be dried and fired without suffering crack development to provide a large ceramic plate having machinability and low expansion properties. On the contrary, the comparative body having an average particle size smaller than 3 µm suffers development of many cracks during drying and firing and has difficulty in producing a large ceramic plate. Moreover, the resulting ceramic plate has poor machinability on account of its too high bending strength. The comparative bodies having an average particle size exceeding 10 µm exhibit poor formability in rolling and have difficulty in producing a large plate.

### COMPARATIVE EXAMPLE 7

Thirty parts of a coarse petalite particles having a particle size of 70 to 300 µm, 35 parts of fine petalite particles having an average particle size of 8 µm, and 35 parts of gaerome clay were wet ground to prepare a mixed powder having an average particle size of 50 µm. Eighty parts of the mixed powder and 20 parts of water were kneaded in a kneader for 30 minutes to prepare a plastic body. The plastic body was formed into as large a flat plate as possible in a friction press under a forming pressure of 150 kgf/cm². The green body was dried at room temperature for 15 hours and fired in a firing furnace at 120°C for 3 hours. The results of evaluation and testing are shown in Table 3.

**TABLE 3**

| | Comparative Example 7 |
|---|---|
| Coarse Petalite (part) | 30 |
| Fine Petalite (part) | 35 |
| Gairome Clay (part) | 35 |
| Water (part*) | 20 |
| Avg. Particle Size of Body (µm) | 50 |
| Size of Flat Plate (mm) | 450 x 450 x 150 |
| Formability in Rolling | poor |
| Crack Development | none |
| Thermal Expansion Coefficient (x10⁻⁷) | 7 |
| Bending Strength (kgf/cm²) | 130 |
| Machinability | good |
| High-Temperature Creep Strain (mm) | 0.14 |

| | |
|---|---|
| * Per 100 parts of the plastic body. | |

As is shown in Table 3, the largest size achieved by the body of Comparative Example 7 which is prepared by using fine petalite particles but has an average particle size as large as 50 µm is about 450 x 450 x 15 mm.

### EXAMPLES 7 TO 9 AND COMPARATIVE EXAMPLES 8 TO 10

A ceramic plate was prepared in the same manner as in Example 1, except for the formulation and the average particle size of the body. The results of evaluation and testing are shown in Table 4.

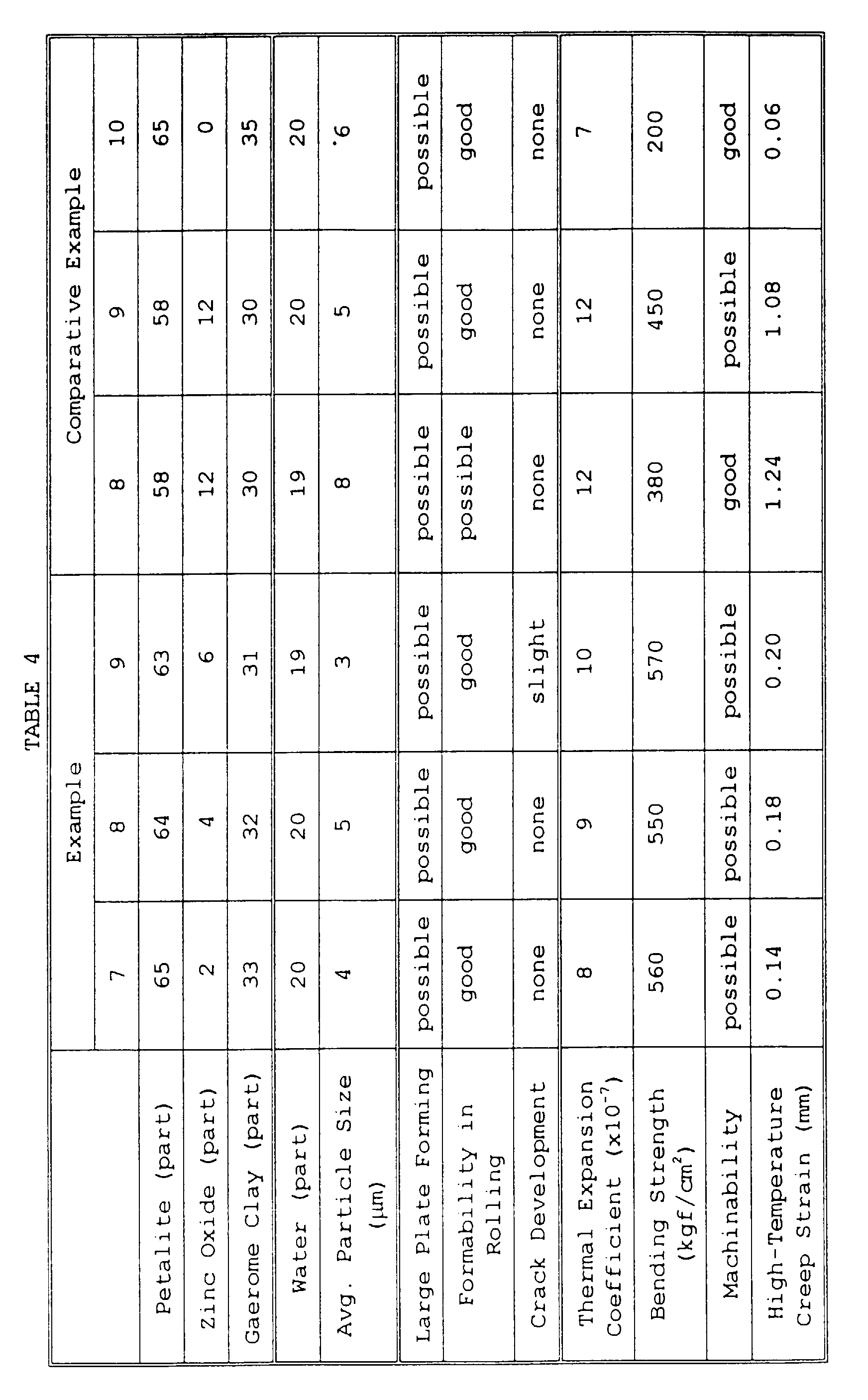

The results in Table 4 prove that the high-temperature creep strain increases where the amount of zinc oxide as a sintering aid exceeds 10%.

### EXAMPLE 10

Twenty parts of fine petalite powder having an average particle size of 2.3 µm, 15 parts of fine zircon powder having an average particle size of 2.3 µm were mixed and ground in a ball mill to prepare a mixed fine powder having an average particle size of 2.3 µm as measured with a laser diffraction particle size distribution analyzer SALD 2000, manufactured by Shimadzu Corp. (hereinafter the same) . The mixed powder was mixed with a petalite raw material (petalite #200 and #52 having an average particle size of 32 and 70 µm, respectively), motoyama-kibushi-clay, and zinc oxide according to the formulation shown in Table 5 below and wet ground with water in a ball mill for 2 hours. The resulting slurry was dried, disintegrated, and classified to prepare a mixed powder having an average particle size of 3.4 µm and a size distribution comprising 18% of 1 µm or smaller particles and 20% of 10 µm or greater particles as measured with a laser diffraction particle size distribution analyzer SALD 2000. Eighty parts of the mixed powder and 20 parts of water were kneaded in a kneader. After the mixture under kneading developed plasticity, 0.15% of polypropylene fiber having a fiber diameter of 9 µm and a fiber length of 5 mm and carbon fiber having a fiber diameter of 13 µm and a fiber length of 1.7 mm were added thereto, followed by further kneading. The total kneading time was 30 minutes. The resulting plastic body had a water content of 21.1%.

The plastic body was put in a deairing pugmill and extruded through a tubular die having an outer diameter of 270 mm, an inner diameter of 230 mm, and a thickness of 40 mm. The extruded tube was cut open to obtain a sheet 845 mm wide, 845 mm long and 40 mm thick. The sheet was rolled with a forming roller biaxially, first in the extrusion direction and then in the perpendicular direction. The biaxially rolled green sheet was dried in a roller hearth kiln at 650°C and fired at 1220°C for 1 hour to obtain a ceramic setter 1040 mm wide, 2130 mm long, and 6.7 mm thick.

The resulting ceramic setter mainly comprised β-spodumene and contained 15% of zircon and 1.5% of zinc oxide. No cracks was observed after drying or firing. Under SEM observation, the cut section of the setter revealed voids (traces of burnt fibers) about 10 µm in diameter and about 120 µm in length as shown in Fig. 1. Incidentally, the cut section of the calcined body before firing showed similar voids, which contained a charcoal-like fine fibrous object. The thermal expansion coefficient, bending strength, water absorption, and abrasion wear of the setter were measured. The results obtained are shown in Table 6.

### EXAMPLES 11 TO 13

Ceramic setters were prepared in the same manner as in Example 10, except for changing the composition of the body and of the plastic body and the powder characteristics of the body as shown in Table 5. No cracks was observed after drying or firing. Under SEM observation, the cut section of the resulting setter revealed voids (traces of burnt fibers) about 0.8 to 90 µm in diameter and about 8 to 90000 µm in length similar to those shown in Fig. 1. Incidentally, the cut section of the calcined body before firing showed similar voids, which contained a charcoal-like fine fibrous object. The thermal expansion coefficient, bending strength, water absorption, and abrasion wear of the setter were measured in the same manner as in Example 10. The results obtained are shown in Table 6.

### COMPARATIVE EXAMPLE 11

A ceramic setter was obtained in the same manner as in Example 10, except that zircon powder, polypropylene fiber and carbon fiber were not used. Under SEM observation, the cut section of the resulting setter revealed no voids as observed in Fig. 1. The thermal expansion coefficient, bending strength, water absorption, and abrasion wear of the setter were measured in the same manner as in Example 10. The results obtained are shown in Table 6.

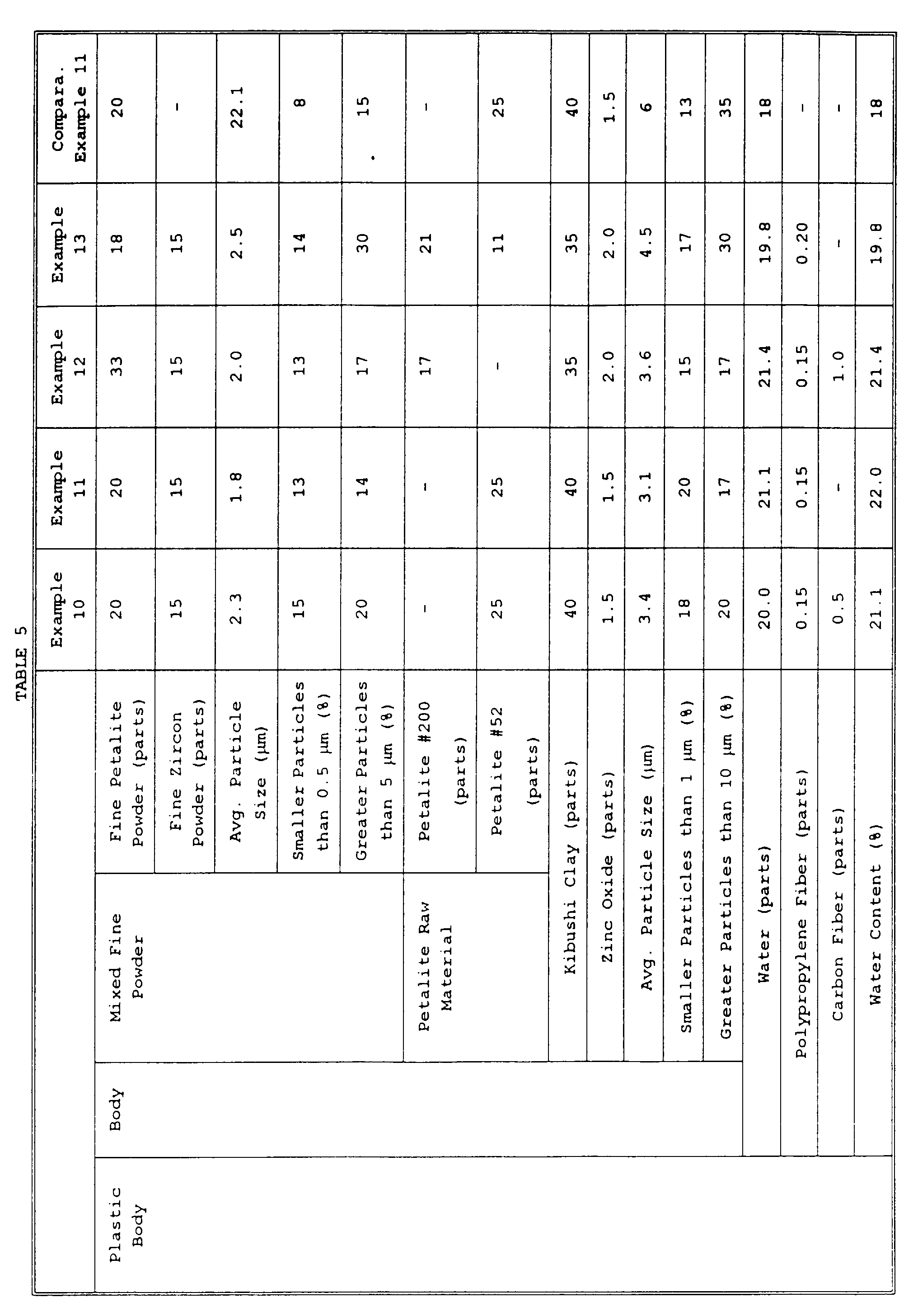

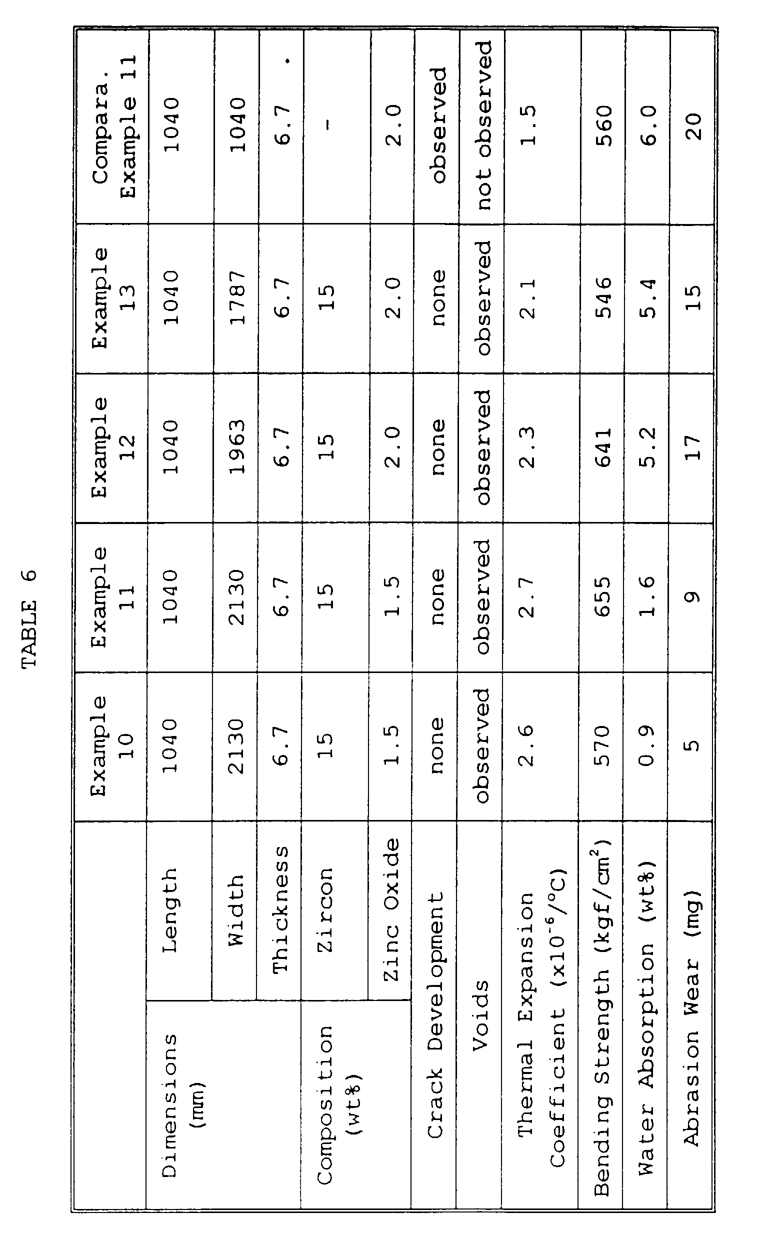

The results in Table 6 prove that ceramic setters having voids have a low water absorption and excellent wear resistance.

While the invention has been described in detail and with reference to specific examples thereof, it will be apparent to one skilled in the art that various changes and modifications can be made therein without departing from the spirit and scope thereof.

## Claims

1. A low-expansion ceramic plate having a length of 500 mm or more, a width of 500 mm or more, and a thickness of 10 mm or less which comprises β-spodumene or β-eucryptite containing a metal oxide added as a sintering aid and has a bending strength of 250 to 600 kgf/cm².

2. A low-expansion ceramic plate according to claim 1, wherein said metal oxide is at least one oxide of a metal selected from the group consisting of zinc, nickel, zirconium, magnesium, titanium, and yttrium, and is added in an amount of 1 to 10% by weight.

3. A process for producing a large size low-expansion ceramic plate which comprises the steps of (1) mixing and grinding a petalite raw material, clay, and a metal oxide added as a sintering aid to prepare a body having an average particle size of 3 to 10 µm, (2) kneading the body together with water to prepare a plastic body, (3) extruding the plastic body into a shape having a loop by means of a deairing pugmill, (4) cutting the extrudate open and rolling the resulting sheet by means of a forming roller at least in the same direction as the extrusion direction to obtain a rolled sheet, (5) forming the rolled sheet into a prescribed shape, and (6) drying and firing the formed green body.

4. A process according to claim 3, wherein said mixing and grinding in step (1) is carried out by separately preparing a first ground mixture comprising a petalite raw material and clay having a prescribed average particle size and a second ground mixture comprising a metal oxide having a prescribed average particle size and mixing the first and second ground mixtures to obtain a body having an average particle size of 3 to 10 µm.

5. A process according to claim 3, wherein the proportion of the clay in said mixed powder is 20 to 40% by weight.

6. A process according to claim 3, wherein reinforcing fiber is added to said plastic body in an amount of 0.05 to 0.5% by weight based on the plastic body.

7. A process according to claim 3, wherein said rolled sheet is further rolled in the direction perpendicular to the extrusion direction.

8. A low-expansion ceramic setter which comprises β-spodumene or β-eucryptite containing zircon and a metal oxide added as a sintering aid other than zircon and has voids having a diameter of 0.8 to 90 µm and a length of 8 to 90,000 µm scattered at random.

9. A low-expansion ceramic setter according to claim 8, wherein said voids are traces of burnt fibers, the fibers having been present in the green body and burnt on firing of the green body.

10. A low-expansion ceramic setter according to claim 9, wherein said fibers are of carbon fiber or polypropylene fiber.

11. A low-expansion ceramic setter according to claim 8, wherein said metal oxide is at one oxide of a metal selected from the group consisting of zinc, nickel, zirconium, magnesium, titanium, and yttrium, and is added in an amount of 0.05 to 10% by weight and zircon is added in an amount of 1 to 50% by weight.

12. A low-expansion ceramic setter according to claim 8, which has a bending strength of 250 to 900 kgf/cm².

13. A low-expansion ceramic setter according to claim 8, which has a length of 500 mm or more, a width of 500 mm or more, and a thickness of 14 mm or less.

14. A process for producing a low-expansion ceramic setter which comprises the steps of (1) mixing and grinding fine petalite powder and fine zircon powder to prepare a mixed powder having an average particle size of 1 to 5 µm, (2) mixing and grinding the mixed powder, a petalite raw material, clay, and a metal oxide to prepare a body having an average particle size of 2 to 10 µm, (3) kneading the body together with water and fiber to prepare a plastic body, (3) extruding the plastic body into a shape having a loop section by means of a deairing pugmill, (4) cutting the extrudate open and rolling the resulting sheet by means of a forming roller at least in the same direction as the extrusion direction to obtain a rolled sheet, (5) forming the rolled sheet into a prescribed shape, and (6) drying and firing the formed green body.

15. A process according to claim 14, wherein said body prepared in step (2) has a particle size distribution comprising 10 to 30% of 1 µm or smaller particles and 15 to 35% of 10 µm or greater particles.

16. A process according to claim 14, wherein the proportion of the clay in the body is 20 to 40% by weight.
